# EUROPÄISCHE PATENTSCHRIFT

(11) **EP 0 929 749 B1**
(45) Veröffentlichungstag und Bekanntmachung des Hinweises auf die Patenterteilung: **07.06.2000**
(21) Anmeldenummer: 97910257.1
(22) Anmeldetag: 07.10.1997
(51) Int. Cl.: F16C 11/06

(54) **KUGELGELENK**
BALL JOINT
JOINT A ROTULE

(30) Priorität: 07.10.1996 DE 29617276 U
(43) Veröffentlichungstag der Anmeldung: 21.07.1999
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9702288
(87) Internationale Veröffentlichungsnummer: WO9815746

(56) Entgegenhaltungen:
- DE-A- 3 940 679
- DE-A- 19 636 420
- DE-B- 1 098 381
- DE-C- 19 513 714
- DE-U- 29 616 350
- FR-A- 1 116 190
- GB-A- 895 068
- GB-A- 1 124 781

## Beschreibung

Die vorliegende Erfindung bezieht sich auf ein Kugelgelenk gemäß dem Oberbegriff des Anspruchs 1 bzw. 2.

Bei einem aus der DE-C-195 13 714 bekannten Kugelgelenk dieser Art besteht die Abdichtung aus einem Abdichtbalg aus elastischem Material. Dieser Abdichtbalg ist über den Zapfen des Kugelgelenks geschoben und mit einem Wulst in eine Nut des Zapfens eingesetzt und mit einem Spannring fixiert. Außerdem ist der Abdichtbalg mit einem der Kugel zugewandten Wulst in eine nutförmige Kehlung einer die Kugel umgebenden Lagerschale eingeschnappt. Zur Festlegung des Abdichtbalgs auf der Lagerschale wird anstelle eines Spannrings die Lagerschale mit einem Kugelgelenkgehäuse umformt und dabei der in die Kehlung der Lagerschale eingeschnappte Wulst mit eingeformt und dadurch in seiner Lage festgelegt.

Aus der GB-A-895068 ist es bekannt, eine Lagerschale aus elastischem Material, z.B. Polyurethan, zweiteilig herzustellen, wobei die Teilung etwa am Kugeläquator erfolgt. An dem dem Kugelzapfen zugewandten Lagerschalenteil ist ein hülsenförmiger ringformig gewellte Fortsatz angeformt, der den Schaft des Kugelzapfens dicht umgibt. Die Abdichtung zum Kugelgelenkgehäuse hin erfolgt durch Andrücken des genannten Lagerschalenteils an einen oberen, nach innen weisenden Gehäuserand des Kugelgelenkgehäuses. Die Einzelteile sind gesondert hergestellt und stehen nicht durch einen Formprozeß miteinander in Verbindung.

Die Konstruktionsweise gemäß der DE-C-19513714 erfordert eine getrennte Herstellung, Lagerhaltung und Montage der Abdichtbälge und Spannringe. Für die Spannringe muß korrosionsbeständiges und damit teures Material verwendet werden. Hinzu kommt, daß beim Aufspannen des Spannrings der Abdichtbalg montagebedingt häufig eingerissen wird, so daß eine hohe Ausschußrate auftreten kann und aufwendige Nachbesserungsarbeiten anfallen können. Wird der Spannring, wie vorgeschlagen, erst nach dem Anformen des Kugelgelenkgehäuses eingesetzt, ist eine Nachbesserung unmöglich und das ganze Kugelgelenk ist dann nicht mehr verwertbarer Ausschuß.

Mit der vorliegenden Erfindung soll die Aufgabe gelöst werden, die Herstellung von Kugelgelenken der eingangs erwähnten Art zu vereinfachen, die Montagezeit zu verkürzen, sowie die Herstellungskosten und die Ausschußraten zu senken. Außerdem soll die Lebensdauer derartiger Kugelgelenke erhöht werden.

Gelöst wird diese Aufgabe durch die Merkmale des Anspruchs 1 bzw. 2.

Hierdurch werden nicht nur Montagekosten und Ausschußquoten gesenkt, sondern durch die vollkommene Umhüllung des Schaftes ohne das Verbleiben eines Resthohlraums kann auch beim Auftreten eines Risses in der Umhüllung noch keine Verunreinigung, wie Staub oder sonstige Materialteilchen, zum Lager vordringen und das Lager beschädigen.

Durch die Anwendung der Erfindung entfällt die getrennte Herstellung und Lagerhaltung von Abdichtungen sowie von Spannringen, da sich der Kunststoff der Umhüllung beim Anformen in die Nut des Kugelgelenkgehäuses hinein erstreckt und sich mit dem Material desselben formschlüssig verbindet. Durch den Wegfall der Spannringe entfallen auch die gegebenenfalls hierdurch bedingten Ausschüsse und Nachbesserungen.

Da die verwendeten Kunststoffe an dem Material des Kugelgelenkgehäuse gut haften, können neben Sicherungs- oder Spiralfederringe auch Nuten gegebenenfalls vollständig entfallen.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: ein Ausführungsbeispiel mit vom Boden aus eingespritzter Lagerschale und die
- Fig. 2 und 2a bis 5: weitere vorteilhafte Ausgestaltungen eines Kugelgelenks.

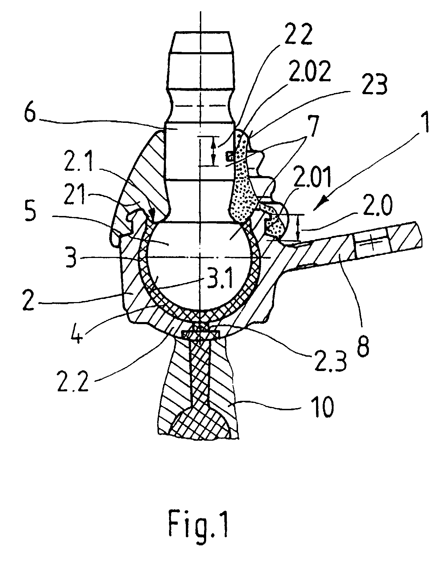

In der Zeichnung ist in Fig. 1 mit 1 ein Kugelgelenk bezeichnet. Es besitzt ein Kugelgelenkgehäuse 2, das mit einer Aussparung 3 versehen ist, die über eine Öffnung 2.1 zugänglich ist. In der Aussparung 3 befindet sich eine eingespritzte Lagerschale 4 aus Kunststoff mit geringem Reibungskoeffizienten. Die Lagerfläche der Lagerschale 4 dient zur Lagerung einer Kugel 5, die am Schaft 6 eines Kugelzapfens 7 vorgesehen ist. Am Kugelgelenkgehäuse 2 ist ein Befestigungsmittel in Form eines seitlich abstehenden Flansches 8 vorgesehen.

Die Herstellung des Kugelgelenks 1 erfolgt derart, daß der Kugelzapfen 7 mit seiner Kugel 5 in die Aussparung 3 in seiner vorgesehenen Endlage eingebracht und anschließend die Öffnung 2.1 mit einem nicht dargestellten Formwerkzeugstempel geschlossen wird. Auf der der Seite 2.1 gegenüberliegenden Seite ist der geschlossene Boden 2.2 des Kugelgelenkgehäuses 2 mit einer Angußöffnung 2.3 versehen, über die durch einen Angußstempel 10 eines nicht näher gezeigten Spritz- oder Spritzgießwerkzeugs die Kunststoffmasse in den verbleibenden Hohlraum zwischen der Innenwand 3.1 der Aussparung 3 und der Kugel 5 eingespritzt wird. Hierdurch wird die Lagerschale 4 gebildet.

Zur guten Verankerung der Lagerschale 4 in der Aussparung 3 ist deren Innenwand 3.1 gerauht, gerieft, umlaufend genutet, oder in sonst geeigneter Weise haftvermittelnd ausgebildet. Insbesondere kann bei der Herstellung des Kugelgelenkgehäuses 2 nach den bekannten Metallgußverfahren die entstehende rauhe Oberfläche unbearbeitet belassen werden, da es nicht auf eine hohe Genauigkeit bei der Herstellung der Innenwand 3.1 ankommt.

Als Material für das Kugelgelenkgehäuse 2 dient ein Metall, vorzugsweise Stahl bzw. Gußstahl. Auch können Aluminium oder Kunststoff verwendet werden. Für die Lagerschale 4 wird ein thermoplastisch oder duroplastisch verformbarer und anschließend aushärtender Kunststoff verwendet, der eine geringe Gleitreibung besitzt. Als vorteilhafte Kunststoffe haben sich Polyethylen, Polypropylen, Polyoxymethylen, Polyethersulfon, Polyetheretherketon oder Polyamid erwiesen. Es sind jedoch auch andere geeignete Kunststoffe anwendbar.

Das Material der Lagerschale 4 kann auch aus einem geschäumten Kunststoff bestehen. Dieser geschäumte Kunststoff kann beispielsweise so hergestellt sein, daß dem Material, das im Spritz- oder im Spritzgießprozeß verarbeitet wird, etwa bis zu 20% Treibmittel zugesetzt sind. Dadurch erhält man einen offenporigen oder geschlossenporigen Kunststoff-Schaumstoffkörper, der trotz der Poren noch eine genügend große Festigkeit besitzt und daher eine lange Lebensdauer gewährleistet. Dieser Kunststoff-Schaumstoffkörper hat bei offenzelliger Ausbildung außerdem die Eigenschaft, Schmiermittel aufnehmen zu können, so daß ein Kugelgelenk 1 mit Dauerschmierung erhalten werden kann.

Erfindungsgemäß ist der bisher durch eine Manschette bzw. einen Balg abgedichtete Bereich zwischen dem Schaft 6 und einer im oberen Bereich 2.0 des Kugelgelenkgehäuses 2 vorgesehenen umlaufenden Nut 2.01 mit einer angeformten elastischen, den gesamten vorhandenen Hohlraum ausfüllenden Umhüllung 21 aus einem vernetzten und/oder unvernetzten Elastomer umgeben. Die Umhüllung 21 verläuft zumindest vom mittleren Bereich 22 des Schaftes 6 aus bis in die Nut 2.01 oder bis unterhalb der Nut 2.01. Beim Anformen der elastischen Umhüllung 21 wird der Kunststoff in die Nut 2.01 eingeformt. Als Material für die Umhüllung 21 dienen vorzugsweise Kunststoffe, wie Polyurethan, Polyester oder Silikon oder auf der Basis von Polyurethan, Polyester oder Silikon. Da die verwendbaren Kunststoffe an dem Material des Kugelgelenkgehäuses 2 gut haften, können Sicherungs- oder Spiralfederringe vollständig entfallen.

Bevorzugt besteht die Umhüllung 21 aus geschlossen- und/oder offenzelligem Material, wie anhand des in der rechten Seite der Fig. 1 gezeigten teilweisen Schnittes durch die Umhüllung 21 dargestellt ist. Hierdurch wird eine günstigere Belastung des Materials bei großen Winkelausschlägen des Schaftes 6 erreicht und die Lebensdauer der Umhüllung 21 verlängert.

Insbesondere ist das geschäumte Material offenzellig ausgebildet und besitzt an seiner Außenoberfläche eine geschlossene Außenhaut 23. Dies bedingt bei mechanischer Beanspruchung eine höhere Festigkeit. Außerdem können bei diesem Material die Zellen als Schmiermittelreservoir dienen. Als Schmiermittel kann beispielsweise Fett oder Öl oder ein Fett-Öl-Gemisch verwendet werden.

Mit Vorteil kann die Außenwand bzw. die Außenhaut 23, ähnlich den bekannten Balgmanschetten, ringförmig gewellt ausgebildet sein, wie anhand der rechten Seite des Kugelgelenks 1 der Fig. 1 gezeigt. Hierdurch werden die Zug- und Druckbelastungen des Materials der Umhüllung 21 bei starkem Ausschlag des Schaftes 6 vermindert und die Lebensdauer der Umhüllung und damit auch des Gleitlagers verlängert.

Es sei erwähnt, daß anstelle einer umlaufenden Nut 2.01 auch mehrere Nutabschnitte oder/und Einbuchtungen oder/und Einkerbungen vorgesehen sein können, in denen sich das Material der Umhüllung 21 fest verankern kann. Außerdem kann die Erfindung auch bei anderen Konstruktionen von Kugelgelenken angewendet werden. Beispielsweise muß keine Kunststoffschale 4 vorhanden sein oder das Kugelgelenkgehäuse 2 kann auch in beliebig anderer Weise, beispielsweise so ausgebildet sein, daß sein Boden eine Öffnung zum Einführen des Kugelzapfens aufweist, der mit einer Druckplatte verschlossen wird, welche durch Umbördeln bzw. Einrollieren eines Randes des Kugelgelenkgehäuses 2 befestigt wird. Auch ist es für die Funktion der Erfindung unbeachtlich, aus welchem Material das Kugelgelenkgehäuse 2 und/oder der Kugelzapfen 7 besteht bzw. bestehen. Diese Materialien können je nach auftretender Belastung oder dgl. frei gewählt werden.

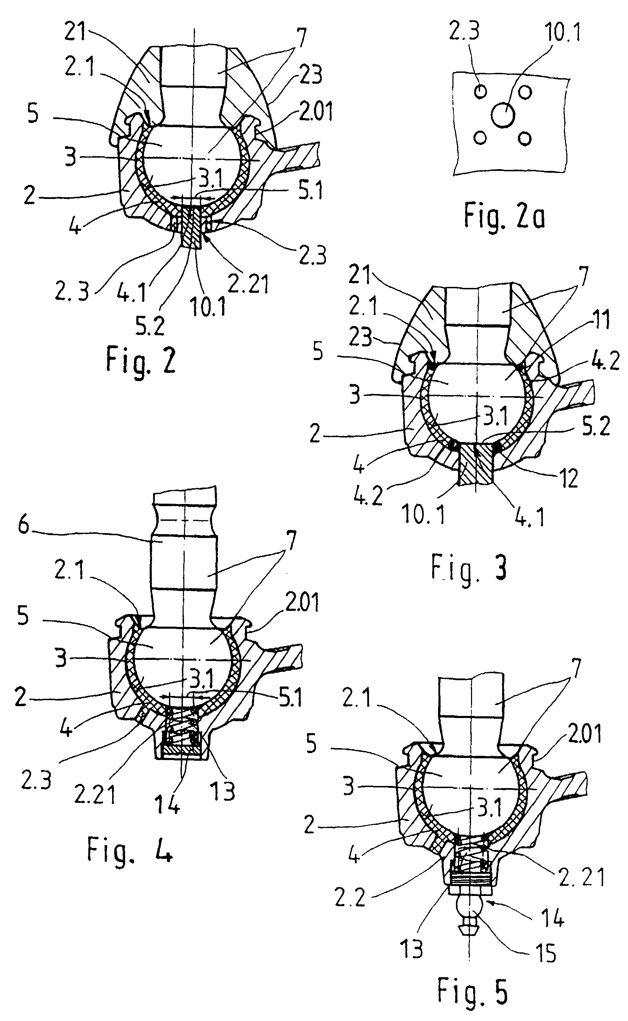

Vorteilhaft ist die Anwendung der Erfindung auch bei Kugelgelenken 1 der in den Fig. 2 bis 5 dargestellten Art, bei denen der Formstempel zur Herstellung einer Kunststofflagerschale 4 in besonderer Weise ausgenützt wird.

Gemäß dem in der Fig. 2 dargestellten Ausführungsbeispiel ist im Boden 2.2 des Kugelgelenkgehäuses 2 auf dem dem Kugelzapfen 7 gegenüberliegenden Kugelkalottenabschnitt 5.1 bei der Herstellung der Lagerschale 4 durch eine als Bohrung ausgebildete Öffnung 2.21 ein im Angußstempel 10 verschiebbar geführter Formstempel 10.1 gegen die Kugel 5 gepreßt.

Ein besonderer Vorteil der Anwendung des Formstempels 10.1 ist aus den Fig. 2 und 3 ersichtlich. Bei den dort gezeigten Kugeln 5 ist der Kugelkalottenabschnitt 5.1 nicht voll als Kugelfläche ausgebildet, sondern bildet z.B. eine mehr oder weniger plane oder nach innen kegelförmige, gegebenenfalls abgestufte oder eingedellte Fläche 5.2. Dies tritt bei der Herstellung des Kugelkörpers 5 in der Regel dann auf, wenn der Kugelzapfen 7 mit der Kugel 5 nach der spanabhebenden Bearbeitung vom Rohmaterial abgetrennt, insbesondere durch Drehen abgestochen wird. Würde hier die Lagerschale 4 ohne Formstempel 10.1 gespritzt werden, dann könnte sich die Kugel 5 nicht mehr oder nur sehr schwer drehen bzw. schwenken lassen. Wird jedoch die Öffnung 2.21 so angeordnet und auch der Formstempel 10.1 derart angeordnet und ausgeführt, daß er zumindest die Fläche 5.2 bedeckt und dicht umschließt, dann tritt dieser Effekt nicht mehr auf. Dieser Flächenbereich wird dann nämlich nicht mehr mit ausgespritzt, so daß die Kugel 5 in der Lagerschale 4 allseitig leicht bewegt werden kann, auch wenn die Kugelfläche nicht voll ausgebildet ist. Durch Anwendung dieser Maßnahme ist daher der Abstechvorgang oder dgl. unkritisch, so daß die Kugel 5 und damit auch das Kugelgelenk 1 rationell und kostengünstig hergestellt werden können.

Zusätzlich ist durch den Formstempel 10.1 unter anderem eine gute Fixierung der Kugel 5 im Formwerkzeug gewährleistet. Bei Verwendung des Formstempels 10.1 ist bzw. sind vorzugsweise wenigstens eine oder auch mehrere Angußstellen 2.3 seitlich vom Formstempel 10.1 angebracht, wie in der Fig. 2a anhand von vier Angußstellen 2.3 schematisch dargestellt ist.

Gemäß dem in Fig. 3 dargestellten Ausführungsbeispiel kann bzw. können mittels entsprechender Formwerkzeuge ein bzw. je ein Dichtungs-O-Ring 11 bzw. 12 aus einem Kautschuk oder einem Elastomer eingesetzt oder insbesondere bei der Herstellung der Lagerschale 4 mit eingeformt werden. Dieser bzw. diese dichten den jeweiligen Endrand 4.2 der Lagerschale 4 nach außen hin ab.

Die durch den Formstempel 10.1 erhaltene Öffnung 4.1 in der Lagerschale 4 kann durch eine eingesetzte, eingepreßte oder eingegossene Dichtung aus einem Elastomer oder aus einem thermo- oder duroplastischen Kunststoff, auch in Form eines geschlossen- oder offenporigen Schaumstoffs, geschlossen werden. Zur Verbesserung der Gleiteigenschaften der Kugel 5 in der Lagerschale 4 kann bei Verwendung von offenzelligem Schaumstoff dieser mit einem Schmiermittel, beispielsweise einem Öl und/oder Fett, getränkt sein.

In die Öffnung 2.21 kann auch gemäß Fig. 4 wenigstens eine Druckfeder 13 aus Kunststoff oder insbesondere aus Metall, beispielsweise in Form einer Schraubenfeder oder einer Tellerfeder, angeordnet sein. Diese kann bzw. können durch ein fest einsetzbares Fixierelement 14, z. B. einem als Dichtung dienenden Verschlußstopfen, aus Kunststoff oder Metall lagegesichert und gegen den Kugelkalottenabschnitt 5.1 vorgespannt sein. Die Druckfeder(n) 13 gewährleistet bzw. gewährleisten Spielfreiheit der Kugel 5 und verhindert bzw. verhindern das Entstehen von Klappergeräuschen bei über der Lebensdauer des Lagers eingetretenem Verschleiß. Das Fixierelement 14 kann in den Boden 2.2 eingeschnappt, eingepreßt, eingeschweißt, eingeklebt und/oder eingebördelt sein. Auch kann es, eventuell zusätzlich, ein Außengewinde aufweisen und beispielsweise gemäß Fig. 4 als einschraubbare Scheibe ausgebildet sein.

Die Öffnung 2.21 kann auch bei Anwendung von Druckfedern 13, mit Öl und/oder Fett gefüllt sein. Zweckmäßig kann das Fixierelement 14 aus einem insbesondere einschraubbaren Schmiernippel 15 bestehen, wie anhand der Fig. 5 gezeigt ist. Auch können der Schmiernippel 15 und das Fixierelement 14 so ausgebildet sein, daß der Schmiernippel 15 in das Fixierelement 14 eingeschraubt werden kann.

Schließlich wird es als vorteilhaft angesehen, daß die Umhüllung 21 als Zweikomponenten-Ausführung, d.h. aus praktisch unelastischem Material, wie beispielsweise Polyamid, im Bereich der umlaufenden Nuten 2.01, 2.02 oder der Nutabschnitte oder/und der Einbuchtungen oder/und der Einkerbungen und aus einem Elastomer in den übrigen Bereichen der Umhüllung 21 ausgeführt ist.

Auch wenn im Ausführungsbeispiel der Fig. 1 zwei Nuten, insbesondere umlaufende Nuten 2.01 und 2.02, eingezeichnet sind, können mit Vorteil auch Ausführungen verwendet werden, die nur eine der beiden Nuten 2.01 oder 2.02 oder gar keine Nut besitzen.

## Patentansprüche

1. Kugelgelenk (1), bestehend aus einem Kugelgelenkgehäuse (2), vorzugsweise mit angeformten Befestigungsmitteln (8), einer in einer Aussparung (3) desselben unmittelbar oder mittels einer zwischen der Aussparung (3) und der Kugel (5) vorgesehenen Lagerschale (4) schwenkbar gelagerten Kugel (5) eines Kugelzapfens (7) und einer elastischen Abdichtung zwischen dem Schaft (6) des Kugelzapfens (7) und dem Kugelgelenkgehäuse (2), dadurch gekennzeichnet, daß die Abdichtung aus einer nach der Montage des Kugelgelenks (1) an das Kugelgelenkgehäuse (2) angeformten, den oberen Bereich (2.0) des Kugelgelenkgehäuses (2) dichtend umfassenden und bis zum Schaft (6) reichenden und diesen umfassenden Umhüllung (21) aus einem vernetzten und/oder unvernetzten Elastomer besteht, wobei zwischen dem Kugelgelenkgehäuse (2), dem Kugelzapfen (7) und dem Elastomer der Umhüllung (21) kein Hohlraum verbleibt.

2. Kugelgelenk (1), bestehend aus einem Kugelgelenkgehäuse (2), vorzugsweise mit angeformten Befestigungsmitteln (8), einer in einer Aussparung (3) desselben unmittelbar oder mittels einer zwischen der Aussparung (3) und der Kugel (5) vorgesehenen Lagerschale (4) schwenkbar gelagerten Kugel (5) eines Kugelzapfens (7) und einer elastischen Abdichtung (21) zwischen dem Schaft (6) des Kugelzapfens (7) und dem Kugelgelenkgehäuse (2), dadurch gekennzeichnet, daß die Abdichtung (21) aus einer nach der Montage des Kugelgelenks (1) an das Kugelgelenkgehäuse (2) angeformten, den oberen Bereich (2.0) des Kugelgelenkgehäuses (2) dichtend umfassenden und bis zum Schaft (6) reichenden und diesen umfassenden Umhüllung (21) besteht, daß das Kugelgelenkgehäuse (2) im oberen Bereich (2.0) außen eine umlaufende Nut (2.01) oder Nutabschnitte oder/und Einbuchtungen oder/und Einkerbungen besitzt, daß sich die Umhüllung (21) bis oder bis unterhalb der Nut (2.01) oder Nutabschnitte oder/und Einbuchtungen oder/und Einkerbungen ersteckt, daß diese mit dem Material der Umhüllung (21) ausgefüllt ist bzw. sind und daß gegebenenfalls am Schaft (6) des Kugelzapfens (7) eine weitere umlaufende Nut (2.02) oder Nutabschnitte oder/und Einbuchtungen oder/und Einkerbungen vorgesehen sind und die Umhüllung (21) als Zweikomponenten-Ausführung, d.h. aus praktisch unelastischem Material, wie beispielsweise Polyamid, im Bereich der umlaufenden Nuten (2.01, 2.02) oder der Nutabschnitte oder/und der Einbuchtungen oder/und der Einkerbungen und aus einem vernetzten und/oder unvernetzten Elastomer in den übrigen Bereichen der Umhüllung (21) ausgeführt ist, wobei zwischen dem Kugelgelenkgehäuse (2), dem Kugelzapfen (7) und dem Material der Umhüllung (21) kein Hohlraum verbleibt.

3. Kugelgelenk nach Anspruch 1 oder 2, dadurch gekennzeichnet, daß das Elastomer der Umhüllung (21) aus einem offenzelligen und/oder geschlossenzelligen Schaumstoff mit einer dichten Außenhaut (23) besteht.

4. Kugelgelenk nach einem der Ansprüche 1 bis 3, dadurch gekennzeichnet, daß das Kugelgelenkgehäuse (2) im oberen Bereich (2.0) außen eine umlaufende Nut (2.01) oder Nutabschnitte oder/und Einbuchtungen oder/und Einkerbungen besitzt, daß sich die Umhüllung (21) bis oder bis unterhalb der Nut (2.01) oder Nutabschnitte oder/und Einbuchtungen oder/und Einkerbungen erstreckt und daß diese mit dem Material der Umhüllung (21) ausgefüllt ist bzw. sind.

5. Kugelgelenk nach einem der Ansprüche 1 bis 4, dadurch gekennzeichnet, daß am Schaft (6) des Kugelzapfens (7) eine weitere umlaufende Nut (2.02) oder Nutabschnitte oder/und Einbuchtungen oder/und Einkerbungen vorgesehen sind.

6. Kugelgelenk nach einem der Ansprüche 1 bis 5, dadurch gekennzeichnet, daß das Elastomer der Umhüllung (21) aus Polyurethan oder auf der Basis von Polyurethan besteht.

7. Kugelgelenk nach einem der Ansprüche 1 bis 5, dadurch gekennzeichnet, daß das Elastomer der Umhüllung (21) aus Polyester oder auf der Basis von Polyester besteht.

8. Kugelgelenk nach einem der Ansprüche 1 bis 5, dadurch gekennzeichnet, daß das Elastomer der Umhüllung (21) aus Silikon oder auf der Basis von Silikon besteht.

9. Kugelgelenk anch einem der Ansprüche 1 bis 8, dadurch gekennzeichnet, daß das Material der Umhüllung (21) ein geschäumter offenzelliger und/oder geschlossenzelliger polymerer Werkstoff ist.

10. Kugelgelenk nach Anspruch 9, dadurch gekennzeichnet, daß der Schaumstoff als offenzelliger Formkörper mit geschlossener Außenhaut (23) ausgebildet ist.

11. Kugelgelenk nach Anspruch 10, dadurch gekennzeichnet, daß die Zellen des Schaumstoffs zumindest zum Teil mit einem Schmiermittel ausgefüllt sind.

12. Kugelgelenk nach einem der Ansprüche 1 bis 11, dadurch gekennzeichnet, daß die Außenoberfläche bzw. die Außenhaut (23) der Umhüllung (21) ringförmig gewellt ist.

13. Kugelgelenk nach einem der Ansprüche 1 bis 12, dadurch gekennzeichnet, daß die Kugel (5) in der Aussparung (3) des Kugelgelenkgehäuses (2) in einer eingesetzten oder eingespritzten Kugelschale (8) aus Kunststoff gelagert ist.

## Claims

1. Ball joint (1), consisting of a ball joint housing (2), preferably with moulded fastening means (8), a ball (5) of a ball pin (7) mounted pivotably in a recess (3) of the housing directly or by means of a bearing shell (4) provided between the recess (3) and the ball (5), and an elastic seal between the shank (6) of the ball pin (7) and the ball joint housing (2), characterised in that the seal consists of a cover (21) made of a crosslinked and/or uncrosslinked elastomer moulded to the ball joint housing (2) after assembly of the ball joint (1), enclosing the upper area (2.0) of the ball joint housing (2) sealingly and extending as far as the shank (6) and enclosing the latter, whereby no cavity remains between the ball joint housing (2), the ball pin (7) and the elastomer of the cover (21).

2. Ball joint (1), consisting of a ball joint housing (2), preferably with moulded fastening means (8), a ball (5) of a ball pin (7) mounted pivotably in a recess (3) of the housing directly or by means of a bearing shell (4) provided between the recess (3) and the ball (5), and an elastic seal (21) between the shank (6) of the ball pin (7) and the ball joint housing (2), characterised in that the seal (21) consists of a cover (21) moulded to the ball joint housing (2) after assembly of the ball joint (1), enclosing the upper area (2.0) of the ball joint housing (2) sealingly and extending as far as the shank (6) and enclosing the latter, in that on the outside in the upper area (2.0) the ball joint housing (2) has a peripheral groove (2.01) or groove sections or/and niches or/and notches, in that the cover (21) extends to or to below the groove (2.01) or groove sections or/and niches or/and notches, in that this or these is or are filled with the material of the cover (21), and in that possibly a further peripheral groove (2.02) or groove sections or/and niches or/and notches are provided in the shank (6) of the ball pin (7), and the cover (21) is embodied in two component form, i.e. of practically inelastic material, such as for example polyamide, in the area of the peripheral grooves (2.01, 2.02) or the groove sections or/and the niches or/and the notches, and of a crosslinked and/or uncrosslinked elastomer in the remaining areas of the cover (21), whereby no cavity remains between the ball joint housing (2), the ball pin (7) and the material of the cover (21).

3. Ball joint according to claim 1 or 2, characterised in that the elastomer of the cover (21) consists of an open-cell and/or closed-cell foam with a sealing outer skin (23).

4. Ball joint according to one of claims 1 to 3, characterised in that on the outside in the upper area (2.0) the ball joint housing (2) has a peripheral groove (2.01) or groove sections or/and niches or/and notches, in that the cover (21) extends to or to below the groove (2.01) or groove sections or/and niches or/and notches, and in that this or these is or are filled with the material of the cover (21).

5. Ball joint according to one of claims 1 to 4, characterised in that a further peripheral groove (2.02) or groove sections or/and niches or/and notches are provided in the shank (6) of the ball pin (7).

6. Ball joint according to one of claims 1 to 5, characterised in that the elastomer of the cover (21) consists of polyurethane or is based on polyurethane.

7. Ball joint according to one of claims 1 to 5, characterised in that the elastomer of the cover (21) consists of polyester or is based on polyester.

8. Ball joint according to one of claims 1 to 5, characterised in that the elastomer of the cover (21) consists of silicone or is based on silicone.

9. Ball joint according to one of claims 1 to 8, characterised in that the material of the cover (21) is a foamed open-cell and/or closed-cell polymer material.

10. Ball joint according to claim 9, characterised in that the foam takes the form of an open-cell moulding with a closed outer skin (23).

11. Ball joint according to claim 10, characterised in that the cells of the foam are at least partly filled with a lubricant.

12. Ball joint according to one of claims 1 to 11, characterised in that the external surface or the outer skin (23) of the cover (21) has annular corrugations.

13. Ball joint according to one of claims 1 to 12, characterised in that the ball (5) is mounted in the recess (3) of the ball joint housing (2) in an inserted or injection-moulded ball shell (8) made of plastic.

## Revendications

1. Joint à rotule (1) composé d'un carter de joint (2), de préférence muni de dispositifs de fixation (8), d'une sphère (5) d'un pivot à rotule (7) logée en rotation possible, dans un évidement (3) de ce carter, d'une façon contiguë ou par l'intermédiaire d'une cuvette (4) formant coussinet, placée entre la sphère et l'évidement (3), et d'un dispositif d'étanchéité élastique entre l'arbre (6) du pivot (7) et le carter (2),
caractérisé en ce que
l'étanchéité est constituée par une enveloppe (21) en élastomère, réticulée ou non, conformée autour du carter (2) après la mise en place du joint (1), entourant la zone supérieure (2.0) du carter (2), d'une façon étanche, et se prolongeant jusqu'à l'arbre (6) en l'entourant, de sorte qu'il ne subsiste aucun espace libre entre le carter (2), le pivot (7) et l'élastomère de l'enveloppe (21).

2. Joint à rotule (1) composé d'un carter de joint (2), de préférence muni de dispositifs de fixation (8), d'une sphère (5) d'un pivot à rotule (7), logée en pivotement possible, dans un évidement (3) de ce carter, d'une façon contiguë ou par l'intermédiaire d'une cuvette (4) formant coussinet, placée entre la sphère(5) et l'évidement (3), et d'un dispositif d'étanchéité (21) élastique entre l'arbre (6) du pivot (7) et le carter (2),
caractérisé en ce que
- l'étanchéité est constituée par une enveloppe (21) en élastomère, réticulée ou non, conformée autour du carter (2) après mise en place du joint (1), entourant la zone supérieure (2.0) du carter (2), d'une façon étanche, et se prolongeant jusqu'à l'arbre (6) en l'entourant,
- le carter (2) possède, dans sa zone supérieure (2.0), à l'extérieur, une rainure périphérique (2.01) ou des portions de rainure, et/ou des embouchures et/ou encoches,
- l'enveloppe (21) s'étend jusqu'à, ou jusqu'au-dessous de la rainure (2.01) ou des portions de rainure, et/ou des embouchures et/ou des encoches,
- celle-ci est remplie - ou celles-ci sont remplies par la matière de l'enveloppe (21),
- une autre rainure périphérique (2.02) ou portions de rainures et/ou embouchures et/ou encoches sont prévues sur l'arbre (6) du pivot (7), et
- l'enveloppe (21) est réalisée en deux composants, c'est-à-dire dans la zone des rainures périphériques (2.01, 2.02) ou des portions de rainure et/ou d'embouchures et/ou d'encoches en un matériau pratiquement non élastique, tel que par exemple un polyamide, et dans la zone résiduelle de l'enveloppe (21), en un élastomère réticulé ou non, de sorte qu'entre le carter (2), le pivot (7) et l'élastomère de l'enveloppe (21), il ne subsiste aucun espace libre.

3. Joint à rotule suivant la revendication 1 ou 2,
caractérisé en ce que
l'élastomère de l'enveloppe (21) est constitué d'un produit à alvéoles ouvertes, et/ou fermées, avec une peau extérieure étanche (23).

4. Joint à rotule suivant la revendication 1 à 3,
caractérisé en ce que
- le carter de joint (2) possède à l'extérieur, dans sa zone supérieure (2.0), une rainure périphérique (2.01) ou des portions de rainure, et ou des embouchures et ou des encoches,
- l'enveloppe (21) s'étend jusqu'à, ou jusqu'au-dessous de la rainure (2.01) ou des portions de rainure, et/ou des embouchures et/ou des encoches, et
- celle-ci est remplie, ou celles-ci sont remplies de la matière de l'enveloppe (21).

5. Joint à rotule suivant la revendication 1 à 4,
caractérisé en ce qu'
autour de l'arbre (6) du joint (7), est prévue une autre rainure (2.02) ou sont prévues des portions de rainure ou d'autres embouchures ou encoches.

6. Joint à rotule suivant la revendication 1 à 5,
caractérisé en ce que
l'élastomère de l'enveloppe (21) est réalisé en polyuréthane ou à base de polyuréthane.

7. Joint à rotule suivant la revendication 1 à 5,
caractérisé en ce que
l'élastomère de l'enveloppe (21) est réalisé en polyester ou à base d'un polyester.

8. Joint à rotule suivant la revendication 1 à 5,
caractérisé en ce que
l'élastomère de l'enveloppe (21) est réalisé en silicone ou à base de silicone.

9. Joint à rotule suivant la revendication 1 à 8,
caractérisé en ce que
le matériau de l'enveloppe (21) est un polymère alvéolé, à cellules ouvertes et/ou fermées.

10. Joint à rotule suivant la revendication 9,
caractérisé en ce que
la matière alvéolée est constitué d'un corps moulé à cellules ouvertes avec une peau extérieure (23) fermée.

11. Joint à rotule suivant la revendication 10,
caractérisé en ce que
les cellules du produit alvéolaire sont remplies au moins en partie d'un produit lubrifiant.

12. Joint à rotule suivant la revendication 1 à 11,
caractérisé en ce que
la surface extérieure ou la peau extérieure (23) de l'enveloppe (21) est ondulée en forme d'anneau.

13. Joint à rotule suivant la revendication 1 à 12,
caractérisé en ce que
la sphère (5) est logée dans l'évidement (3) du carter de joint (2) dans une cuvette (8) en plastique déposé ou injecté.
